# EUROPÄISCHE PATENTSCHRIFT

(11) **EP 3 870 701 B1**
(45) Veröffentlichungstag und Bekanntmachung des Hinweises auf die Patenterteilung: **01.07.2026**
(21) Anmeldenummer: 19769143.9
(22) Anmeldetag: 13.09.2019
(51) Int. Cl.: C12N 15/10, G01N 1/40

(54) **VORRICHTUNG ZUM FILTERN**
DEVICE FOR FILTERING
DISPOSITIF DE FILTRATION

(30) Priorität: 22.10.2018 DE 102018126251
(43) Veröffentlichungstag der Anmeldung: 01.09.2021
(73) Patentinhaber: Analytik Jena GmbH+Co. KG, 07745 Jena (DE)
(72) Erfinder: MÖLLER, Einar, 07743 Jena (DE); KNIPPSCHILD, Claus, 07745 Jena (DE); PAULENZ, Chistian, 07747 Jena (DE)
(74) Vertreter: Endress + Hauser Group Services (Deutschland) AG+Co. KG
(86) Internationale Anmeldenummer: PCT/EP2019/074536
(87) Internationale Veröffentlichungsnummer: WO 2020/083565

(56) Entgegenhaltungen:
- WO-A1-2017/223176
- US-A1- 2014 308 659
- US-A1- 2016 025 607

## Beschreibung

Die vorliegende Erfindung betrifft eine Vorrichtung zur Isolierung zumindest einer Substanz aus einer Probe, sowie ein Verfahren zur Isolierung einer Substanz aus einer Probe mittels einer erfindungsgemäßen Vorrichtung. Die Vorrichtung dient insbesondere der Trennung, Filterung bzw. Separation der Substanz aus der Probe. Die Probe wiederum befindet sich insbesondere in der mobilen Phase.

Die Filtration von Proben gehört zu den mechanischen Trennverfahren und findet grundsätzlich in vielen unterschiedlichen Bereichen Anwendung. Im biologischen Bereich wird die Filtration beispielsweise häufig zur Isolation von Nukleinsäuren aus einer flüssigen Phase oder zur Isolation und Aufreinigung von Zellen eingesetzt.

Das zu trennende bzw. zu filternde, die jeweilige Substanz enthaltende Gemisch läuft durch ein Filterelement, welches für die zu filternde Substanz durchlässig ist, die übrigen in der Probe verbleibenden Substanzen jedoch zurückhält. Aus dem Stand der Technik sind in diesem Zusammenhang viele verschiedene ans sich bekannte Filtrationsverfahren bekannt geworden, welche hier nicht einzeln aufgeführt werden können.

Um die jeweilige Probe bzw. die zu filternde Substanz durch das Filterelement bewegen zu können, sind verschiedene Möglichkeiten bekannt geworden. Beispielsweise kann die auf die Probe wirkende Schwerkraft ausgenutzt werden. Bei dichten Filterelementen, bzw. im Falle geringer Porengrößen des Filterelements, oder auch zur Beschleunigung des Filtervorgangs an sich, können aber darüber hinaus auch weitere auf die Probe einwirkende Kräfte ausgenutzt werden. In diesem Zusammenhang ist beispielsweise die Zentrifugalfiltration zu nennen, bei welcher eine auf die Probe einwirkende Zentrifugalkraft ausgenutzt wird. Eine andere Möglichkeit besteht darin, Druck auf die Probe auszuüben.

Hierbei wird normalerweise eine Probe durch eine Vorrichtung mit einem Probeneinlass und einem Probenauslass geführt, wobei zwischen dem Probeneinlass und dem Probenauslass ein Filterelement angeordnet ist, und wobei zwischen dem Probeneinlass und Probenauslass eine Druckdifferenz angelegt wird. Durch die Ausnutzung einer Druckkraft lassen sich vorteilhaft besonders kleine und einfach automatisierbare Filtervorrichtungen realisieren. So sind beispielsweise für den Fall der Isolation von Nukleinsäuren aus Proben oder ganzen Zellen unterschiedlichste Methoden zur Filtration unter Ausnutzung einer Druckkraft bekannt geworden, wie u.a. in den Dokumenten DE69929882T2, EP1512741A, JP2005118020A, US5804684A, US7217513B2, US7811758B2, US8017379B2, oder auch US8062846B2 beschrieben. Die DE102007021952A1 beschreibt außerdem eine Filtervorrichtung mit zwei über eine Öffnung, in welcher sich ein Nukleinsäureadsorptionsteil befindet, miteinander verbundenen Behältern, von denen jeweils ein Behälter unter Druck gesetzt wird, während im anderen Behälter der Druck jeweils abgebaut ist. Auf diese Weise wird die Probenlösung durch das Nukleinsäureadsorptionsteil hin und her bewegt. Eine weitere Filtervorrichtung und ein weiteres Verfahren sind aus dem Dokumente US2016025607A1 bekannt.

Ein Nachteil bei Ausnutzung einer Druckkraft zur Filtration einer Probe besteht allerdings darin, dass Kontaminationen auftreten können. Nachdem das Filtrat das Filterelement passiert hat, wird es üblicherweise in einem Auffangbehälter aufgefangen. Aufgrund der wirkenden Druckkraft und des verdrängten Volumens resultiert ein Luftstrom, der feine Tropfen des Filtrats mitreißen kann, insbesondere derart, dass sich ein Aerosol bildet. Dieses Aerosol kann sich in der Folge unkontrolliert absetzen, insbesondere im Bereich einer Aufreinigungseinheit der Filter- bzw. Filtrationsvorrichtung, und führt dann zu Kontaminationen.

Der vorliegenden Erfindung liegt somit die Aufgabe zugrunde, das Kontaminationsrisiko bei einer Filtration unter Ausnutzung einer Druckkraft zu minimieren.

Diese Aufgabe wird gelöst durch die Vorrichtung nach Anspruch 1, das Verfahren nach Anspruch 11, sowie durch die Verwendung nach Anspruch 13.

Hinsichtlich der Vorrichtung wird die Aufgabe gelöst durch eine Vorrichtung zur Isolierung zumindest einer Substanz aus einer Probe umfassend ein Filtermodul mit einem Probeneinlass, einem Probenauslass und einem Filterelement zur Isolierung der Substanz, und eine Druckerzeugungsvorrichtung, welche dazu ausgestaltet ist, zumindest im Bereich des Probeneinlasses einen Überdruck zu erzeugen. Erfindungsgemäß umfasst die Vorrichtung ferner eine Absaugvorrichtung, welche dazu ausgestaltet ist, zumindest im Bereich des Probenauslasses einen Unterdruck zu erzeugen. Ferner ist die Vorrichtung erfindungsgemäß dazu ausgestaltet ist, den Überdruck in Abhängigkeit der Viskosität der Probe zu wählen und den Unterdruck in Abhängigkeit des Überdrucks einzustellen.

Das Filtermodul dient dem Führen einer Probe durch das Filtermodul vom Probeneinlass über das Filterelement zum Probenauslass. Während dieses Vorgangs wird mittels der Druckerzeugungsvorrichtung zumindest im Bereich des Probeneinlasses ein Überdruck und mittels der Absaugvorrichtung ein Unterdruck zumindest im Bereich ein Unterdruck erzeugt. Das Erzeugen eines Überdrucks bzw. eines Unterdrucks bezieht sich dabei jeweils auf den jeweils herrschenden Normaldruck. Unter Normbedingungen ist der Normaldruck definiert als der mittlere Luftdruck der Atmosphäre auf Meereshöhe und beträgt beispielsweise etwa 1bar.

Bei der Vorrichtung handelt es sich somit um eine Vorrichtung zur Filtration einer Probe unter Ausnutzung einer Druckkraft. Um eine Druckdifferenz zwischen dem Probeneinlass und Probenauslass des Filtermoduls zu erreichen, wird mittels der Druckerzeugungsvorrichtung im Bereich des Probeneinlasses ein Überdruck erzeugt. Indem im Bereich des Probenauslasses ferner eine Absaugvorrichtung angeordnet ist, kann sowohl der aus der Druckkraft resultierende Luftstrom, als auch das jeweils entstandene aus dem Filtrat gebildete Aerosol abgesaugt werden. Auf diese Weise kann eine Kontamination erfolgreich verhindert werden. Das abgesaugte Aerosol kann beispielsweise in ein separates Behältnis geführt werden.

Die vorliegende Erfindung lässt sich für eine Vielzahl unterschiedlicher an sich aus dem Stand der Technik bekannter Filtrationsvorrichtungen und/oder Filtrationsverfahren einsetzen. Ein mögliches Anwendungsbeispiel ist die Isolierung von Nukleinsäuren, wobei beispielsweise die in der Beschreibungseinleitung genannten Varianten für Filtrationsvorrichtungen und/oder Filtrationsverfahren denkbar sind. Keineswegs ist die vorliegende Erfindung jedoch auf die genannten Varianten beschränkt.

In einer Ausgestaltung umfasst das Filterelement eine permeable Membran oder einen Filter. Im Falle einer Membran handelt es sich insbesondere um eine Ultrafiltrationsmembran, Mikrofiltrationsmembran oder Nanofiltrationsmembran. Im Falle eines Filters kann es sich beispielsweise um einen Silicafilter, Größenausschlussfilter handeln.

In einer weiteren Ausgestaltung handelt es sich bei der Substanz um eine Partikelsorte, um ein Molekül, insbesondere eine Nukleinsäure oder ein Protein, oder um eine Zelle oder einen Bestandteil einer Zelle. Aber auch andere Substanzen können mittels der vorliegenden Erfindung aus einer Probe isoliert werden.

In noch einer Ausgestaltung umfasst die Vorrichtung einen Auffangbehälter zur Aufnahme eines Filtrats der Probe. Der Auffangbehälter und das Filtermodul können in diesem Fall bezüglich ihrer Ausgestaltung, insbesondere bezüglich ihrer Dimensionierung geeignet aneinander angepasst werden.

Eine bevorzugte Ausgestaltung der Vorrichtung beinhaltet, dass das Filtermodul zumindest abschnittsweise zylindrisch ausgestaltet ist. Beispielsweise umfasst das Filtermodul einen zumindest abschnittsweise röhrenförmigen Hohlkörper, in welchem zumindest in einem Abschnitt entlang seiner Längsachse das Filterelement derart angeordnet ist, dass eine Probe, welche durch das Filtermodul geführt wird, das Filterelement passieren muss. Die beiden Endbereiche des röhrenförmigen Hohlkörpers können für dieses Beispiel den Probeneinlass und den Probenauslass bilden.

Eine weitere bevorzugte Ausgestaltung beinhaltet, dass zumindest ein Teilbereich des Filtermoduls, insbesondere ein Teilbereich umfassend den Probenauslass und/oder der Auffangbehälter derart ausgestaltet ist/sind, dass das Filtermodul bis zu einer vorgebbaren Eintauchtiefe in den Auffangbehälter einbringbar ist.

In dieser Hinsicht ist es von Vorteil, wenn das Filtermodul zumindest in dem Teilbereich, welcher in den Auffangbehälter einbringbar ist, einen geringeren Durchmesser aufweist als der Auffangbehälter. Insbesondere ist das Filtermodul derart ausgestaltet, dass bei Einbringung bis zu der vorgebbaren Eintauchtiefe ein Spalt zwischen dem Filtermodul und dem Auffangbehälter im Bereich einer Öffnung des Auffangbehälters verbleibt.

Ebenso ist es von Vorteil, wenn ein Durchmesser des Filtermoduls zumindest abschnittsweise, insbesondere in dem Teilbereich, welcher in den Auffangbehälter einbringbar ist, variabel ist. In dem Abschnitt, in welchem das Filterelement angeordnet ist, ist der Durchmesser des Filtermoduls wiederum bevorzugt im Wesentlichen konstant.

Beispielsweise weist das Filtermodul im Bereich des Probeneinlasses einen ersten Durchmesser, und im Bereich des Probenauslasses einen zweiten Durchmesser auf, wobei der zweite Durchmesser geringer ist als der erste Durchmesser. Zwischen den Bereichen mit erstem und zweitem Durchmesser kann ein Absatz sein, derart, dass die Veränderung im Durchmesser im Wesentlichen abrupt erfolgt. Ebenso kann das Filtermodul aber auch derart ausgestaltet sein, dass sich der Durchmesser zum Probenauslass hin zumindest abschnittsweise kontinuierlich verringert. Die Verringerung im Durchmesser kann beispielsweise auch bis hin zum Probenauslass erfolgen.

Eine Ausgestaltung beinhaltet, dass die Druckerzeugungsvorrichtung dazu ausgestaltet ist, mittels eines Gases, oder eines Gasgemisches, insbesondere Luft, den Überdruck zu erzeugen.

Eine weitere Ausgestaltung der Vorrichtung beinhaltet, dass die Druckerzeugungseinrichtung im Bereich des Probeneinlasses angeordnet ist, und/oder dass die Absaugvorrichtung im Bereich des Probenauslasses und/oder einer Öffnung des Auffangbehälters angeordnet ist.

Die der Erfindung zugrunde liegende Aufgabe wird ferner gelöst durch ein Verfahren zur Isolierung zumindest einer Substanz aus einer Probe umfassend folgende Verfahrensschritte
- Führen einer Probe durch ein Filtermodul von einem Probeneinlass über ein Filterelement zu einem Probenauslass,
- Erzeugen eines Überdrucks zumindest im Bereich des Probeneinlasses, und
- Erzeugen eines Unterdrucks zumindest im Bereich eines Probenauslasses
dadurch gekennzeichnet, dass der Überdruck in Abhängigkeit der Viskosität der Probe gewählt wird, und der Unterdruck in Abhängigkeit des Überdrucks eingestellt wird.

Insbesondere kann das Verfahren mittels einer erfindungsgemäßen Vorrichtung nach zumindest einer der zuvor beschriebenen Ausgestaltungen durchgeführt werden.

Erfindungsgemäß wird der Überdruck in Abhängigkeit der Viskosität der Probe gewählt. Je höher die Viskosität, desto höher der benötigte Überdruck. Der Höhe des eingestellten Überdrucks sind jedoch nach oben hin auch Grenzen gesetzt, welche insbesondere die Betriebssicherheit der jeweils verwendeten Vorrichtung und den Prozessbedingungen des jeweiligen Filtrationsvorgangs ergeben.

Erfindungsgemäß wird der Unterdruck in Abhängigkeit des Überdrucks eingestellt. Der Unterdruck wird insbesondere in Abhängigkeit der jeweils aus dem Überdruck resultierenden Druckkraft eingestellt. Dabei sollte der Unterdruck so gering wie möglich, jedoch ausreichend zur Vermeidung der Bildung eines Aerosols gewählt werden.

Eine besonders bevorzugte Ausgestaltung des Verfahrens beinhaltet, dass der Überdruck und/oder der Unterdruck derart eingestellt werden, dass ein Volumenstrom infolge des Überdrucks im Wesentlichen einem Volumenstrom infolge des Unterdrucks entspricht. Insbesondere werden der Überdruck und/oder der Unterdruck derart eingestellt, dass kein Überdruck im Bereich des Auffanggefäßes infolge des aus der Druckkraft resultierenden Volumenstroms, entstehen kann.

Die vorliegende Erfindung betrifft ferner die Verwendung einer erfindungsgemäßen Vorrichtung und/oder eines erfindungsgemäßen Verfahrens je nach zumindest einer der beschriebenen Ausgestaltungen bei der Isolierung von Zellen, Zellbestandteilen, oder Nukleinsäuren aus einer Probe.

Die in Zusammenhang mit der erfindungsgemäßen Vorrichtung beschriebenen Ausgestaltungen sind ferner mutatis mutandis auch auf das erfindungsgemäße Verfahren anwendbar und umgekehrt.

Die Erfindung wird im Folgenden anhand der nachfolgenden Figuren näher erläutert. Es zeigen:
Fig. 1 zeigt eine erfindungsgemäße Vorrichtung, wobei die einzelnen Komponenten getrennt voneinander dargestellt sind,
Fig. 2 zeigt die erfindungsgemäße Vorrichtung aus Fig. 1 im zusammengesetzten Zustand, und
Fig. 3 zeigt verschiedene mögliche Geometrien für das Filtermodul und den Auffangbehälter.
In den Figuren sind gleiche Elemente mit gleichem Bezugszeichen versehen.

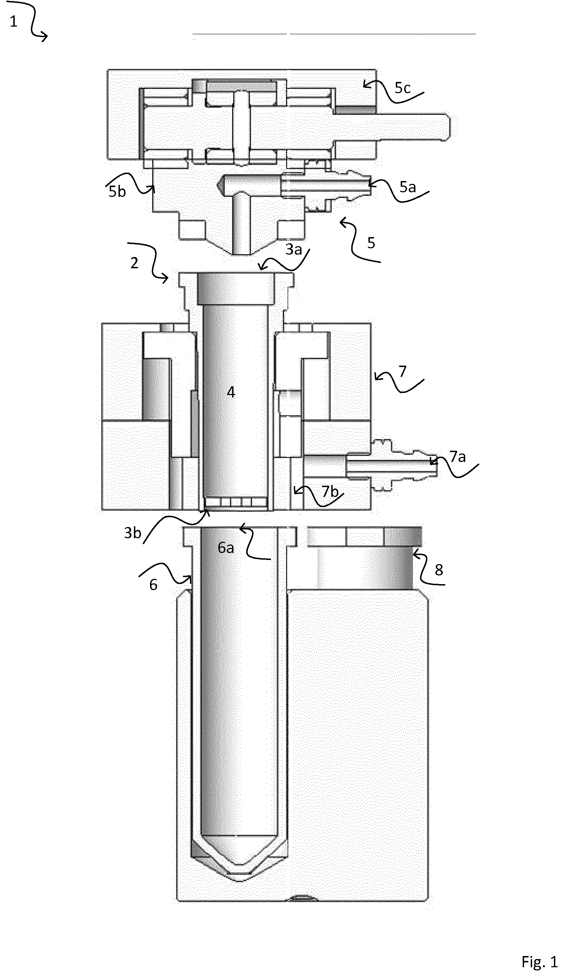

Fig. 1 zeigt eine erfindungsgemäße Vorrichtung 1 mit einem Filtermodul 2. Das Filtermodul 2 ist im Wesentlichen in Form eines zylindrischen Hohlkörpers ausgestaltet, wobei die Endbereiche des Hohlkörpers einen Probeneinlass 3a und einen Probenauslass 3b bilden. Innerhalb des Filtermoduls 2 ist ein Filterelement 4 angeordnet, welches in der gewählten Darstellung selbst nicht sichtbar ist. Im fortlaufenden Betrieb wird die jeweils zu filternde Probe vom Probeneinlass 3a zum Probenauslass 3b geführt und passiert dabei das Filterelement 4. Das Filterelement kann beispielsweise eine Membran oder einen Filter aufweisen. Aber auch andere Ausgestaltungen des Filterelements sind denkbar und fallen unter die vorliegende Erfindung.

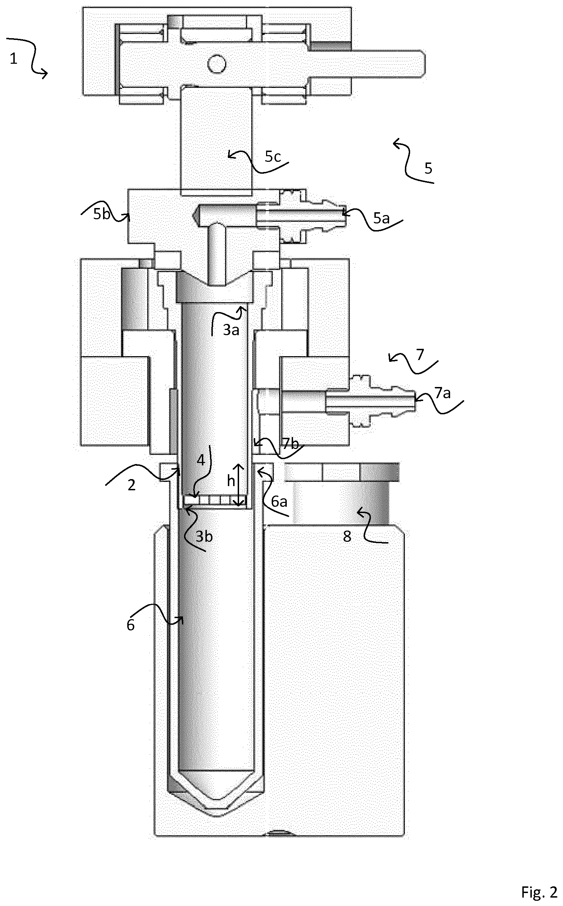

Im Bereich des Probeneinlasses 3a des Filtermoduls 2 ist eine Druckerzeugungseinheit 5 anordenbar, welche zur Erzeugung eines Überdrucks im Bereich des Probeneinlasses 3a, insbesondere innerhalb des Filtermoduls 4 zwischen dem Probeneinlass 3a und dem Filterelement 4, dient. In der hier gezeigten Ansicht ist die Druckerzeugungsvorrichtung 5 separat vom Filtermodul 2 dargestellt. Im fortlaufenden Betrieb, wie in Fig. 2 dargestellt, wird die Druckerzeugungsvorrichtung 5 auf das Filtermodul 2 aufgesetzt.

Im Rahmen der vorliegenden Erfindung kommen als Druckerzeugungseinrichtungen 5 alle dem Fachmann wohlbekannten Druckerzeugungsvorrichtungen, welche in Zusammenhang mit einer Filtrationsvorrichtung geeignet sind, in Frage. Bei der hier beispielhaft dargestellten Druckerzeugungseinrichtung 5 wird mittels eines Gases oder Gasgemisches ein Überdruck erzeugt. Zu diesem Zweck umfasst die Druckerzeugungseinrichtung 5 aus Fig. 1 einen Kanal zur Gaszufuhr 5a, insbesondere zur Druckluftzufuhr, ein Verbindungselement 5b, welches im geschlossenen Zustand dicht mit dem Probeneinlass 3a des Filtermoduls 2 abschließt und ein mechanisches Element 5c. Durch eine Horizontalbewegung des mechanischen Elements 5c ist es möglich, das Verbindungselement 5b dicht auf den Probeneinlass 3a des Filtermoduls 2 zu pressen und das Filtermodul in den Auffangbehälter 6 zu schieben. Dabei dient das mechanische Element 5c sowohl zum Schließen als auch zum Öffnen der Anordnung, bzw. zum lösbaren Verbinden der einzelnen Komponenten der Vorrichtung 1.

Das durch das Filtermodul 2 geführte Filtrat der Probe wird in Auffangbehälter 6 aufgefangen. Aufgrund der wirkenden Druckkraft und des verdrängten Volumens resultiert ein Luftstrom, der feine Tropfen des Filtrats mitreißen kann, insbesondere derart, dass sich ein Aerosol bildet. Dies wiederum kann zu Ablagerungen des Filtrats und damit einhergehend zu einer Kontamination führen. Um dies zu verhindern, umfasst die erfindungsgemäße Vorrichtung außerdem eine Absaugvorrichtung 7, welche dazu ausgestaltet ist, zumindest im Bereich des Probenauslasses 3b des Filtermoduls 2 einen Unterdruck zu erzeugen. Insbesondere kann zwischen Auffangbehälter 6 und dem Filterelement 4 auf der dem Probenauslass 3b zugewandten Seite ein Unterdruck erzeugt werden. Aufgrund des herrschenden Unterdrucks wird der aus der Druckkraft resultierende Volumenstrom und das ggf. entstehende Aerosol abgesaugt. Eine Kontamination kann entsprechend verhindert werden.

Die Absaugvorrichtung 7 ist für das vorliegende Beispiel lösbar an dem Filtermodul 4 befestigt. Die Absaugvorrichtung 7 umfasst in der gezeigten Ausgestaltung einen Kanal 7a, über welchen ein Unterdruck erzeugt werden kann. Dabei kann es sich insbesondere um einen Druckluftkanal handeln. Zudem umfasst die Absaugvorrichtung einen Abzugkanal 7b, über welchen Gas, insbesondere Luft, sowie ggf. entstehendes Aerosol aus dem durch den Probenauslass 3b und den Auffangbehälter 6 gebildeten Volumen abgesaugt werden kann. Das jeweils abgesaugte Aerosol kann dabei beispielsweise in einem separaten Abfallbehälter 8 aufgefangen werden.

Eine Ansicht der Vorrichtung aus Fig.1 im zusammengesetzten Zustand ist in Fig. 2 dargestellt. Die Druckerzeugungsvorrichtung 5 ist auf den Probeneinlass 3a des Filtermoduls 2 aufgesetzt und verschließt den Probeneinlass 3a druckdicht. Das Filtermodul 2 dringt ferner im Bereich des Probenauslasses 3b bis zu der vorgebbaren Eindringtiefe h in den Auffangbehälter 6 ein. Die Eintauchtiefe h wird dabei bevorzugt unter Berücksichtigung des eingestellten Überdrucks im Bereich des Probeneinlasses 3a und des eingestellten Unterdrucks im Bereich des Probenauslasses 3b gewählt. Weiterhin hängt sie von der chemischen und/oder physikalischen Beschaffenheit der Probe, beispielsweise von deren Viskosität, ab.

Im Rahmen der vorliegenden Erfindung sind zahlreiche mögliche Ausgestaltungen des Filtermoduls 2 und des Auffangbehälters 6 denkbar. Das Filtermodul 2, bzw. zumindest ein Teilbereich im Bereich des Probenauslasses, insbesondere der Teilbereich, welcher in den Auffangbehälter 6 einbringbar ist, sowie der Auffangbehälter selbst können geeignet aneinander angepasst werden. Insbesondere gilt es, eine möglichst effektive Absaugung mittels der Absaugvorrichtung 7 zu gewährleisten.

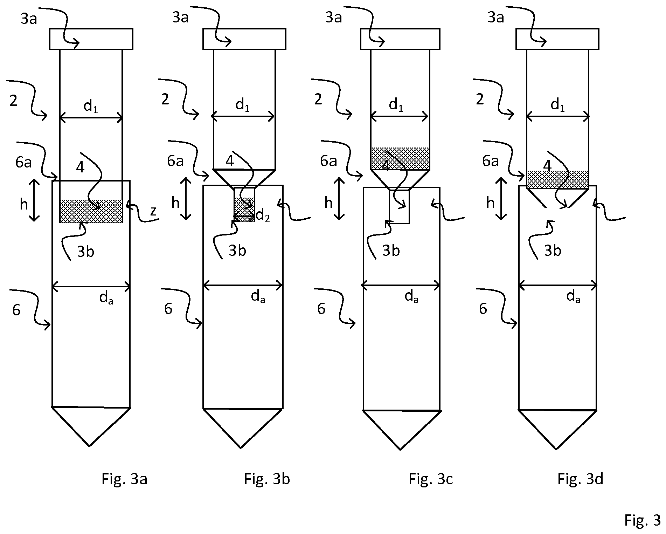

Gemäß der in Fig. 3a gezeigten Ausgestaltung weist das Filtermodul 4 einen Durchmesser d₁ auf, welcher geringer ist als ein Durchmesser dₐ des Auffangbehälters 6. Dadurch entsteht im Bereich der Öffnung 6a des Auffangbehälters 6 ein Spalt z, durch welchen der aus der Druckkraft resultierende Volumenstrom sowie das ggf. entstehende Aerosol abgesaugt werden können. Das Filterelement 4 ist für die gezeigte Ausführung im Bereich des Probenauslasses 3b angeordnet. Es kann aber auch in einem anderen Abschnitt des Filtermoduls 2 angeordnet sein.

Im Gegensatz zur in Fig. 3a gezeigten Ausgestaltung weist das Filtermodul 2 aus Fig. 3b in einem dem Probeneinlass 3a zugewandten Abschnitt zwar den ersten Durchmesser d₁ auf, in einem dem Probenauslass zugewandten Abschnitt hat es jedoch einen zweiten Durchmesser d₂, welcher geringer als der erste Durchmesser d₁ ist. Zwischen den beiden Bereichen verringert sich der Durchmesser d kontinuierlich vom ersten d₁ auf den zweiten Wert d₂. Das Filterelement 2 ist dabei ähnlich wie im Fall der Fig. 3a im Bereich des Probenauslasses 3b angeordnet und befindet sich in dem Abschnitt des Filtermoduls 2 mit dem zweiten Durchmesser d₂. Dagegen befindet sich das Filterelement 4 in Fig. 3c im Abschnitt des Filtermoduls 2 mit dem ersten Durchmesser d₁. Bei der Ausgestaltung gemäß Fig. 3d wiederum verringert sich der Durchmesser vom ersten Wert d₁ in einem dem Probenauslass 3b zugewandten Abschnitt des Filtermoduls 2 kontinuierlich auf den Wert d₂. Es folgt jedoch kein weiterer Abschnitt mit konstantem Durchmesser d₂, wie im Falle der Figuren Fig. 3b und 3c.

Die jeweilige Geometrie des Filtermoduls 2 und/oder des Auffangbehälters 6 werden bevorzugt an die jeweils zu filternden Proben angepasst. Berücksichtigbar sind insbesondere die Viskosität, der Feststoffgehalt oder die Konzentration der zu filternden Substanz in der Probe. Eine Anpassung der Geometrien ist vorteilhaft, um beispielsweise einen Tropfenabriss im Bereich des Probenauslasses 3b, oder die Tropfenbildung des Filtrats gezielt zu beeinflussen. Eine weitere mögliche Maßnahme in diesem Zusammenhang ist eine geeignete Anpassung des Filtervolumens des Filtermoduls 2.

### Bezugszeichen

- 1: Vorrichtung
- 2: Filtermodul
- 3: a: Probeneinlass, b: Probenauslass
- 4: Filterelement
- 5: Druckerzeugungsvorrichtung
- 5a: Kanal zur Gaszufuhr
- 5b: Verbindungselement
- 5c: mechanisches Element
- 6: Auffangbehälter
- 6a: Öffnung des Auffangbehälters
- 7: Absaugvorrichtung
- 7a: Kanal zur Erzeugung von Unterdruck
- 7b: Abzugskanal
- 8: Abfallbehälter
- d,d₁,d₂,da: Durchmesser des Filtermoduls und des Auffangbehälters
- z: Spalt
- h: Vorgebbare Eintauchtiefe

## Patentansprüche

1. Vorrichtung (1) zur Isolierung zumindest einer Substanz aus einer Probe umfassend
ein Filtermodul (2) mit einem Probeneinlass (3a), einem Probenauslass (3b) und einem Filterelement (4) zur Isolierung der Substanz,
eine Druckerzeugungsvorrichtung (5), welche dazu ausgestaltet ist, zumindest im Bereich des Probeneinlasses (3a) einen Überdruck zu erzeugen, und
eine Absaugvorrichtung (7), welche dazu ausgestaltet ist, zumindest im Bereich des Probenauslasses (3b) einen Unterdruck zu erzeugen,
**dadurch gekennzeichnet,**
**dass** die Vorrichtung (1) dazu ausgestaltet ist, den Überdruck in Abhängigkeit der Viskosität der Probe zu wählen und den Unterdruck in Abhängigkeit des Überdrucks einzustellen.

2. Vorrichtung (1) nach Anspruch 1
wobei das Filterelement (4) eine permeable Membran oder einen Filter umfasst.

3. Vorrichtung (1) nach Anspruch 1 oder 2,
wobei es sich bei der Substanz um eine Partikelsorte, ein in der Probe enthaltenes Molekül, insbesondere eine Nukleinsäure oder ein Protein, oder um eine Zelle, oder einen Bestandteil einer Zelle handelt.

4. Vorrichtung (1) nach zumindest einem der vorherigen Ansprüche,
wobei das Filtermodul (2) zumindest abschnittsweise zylindrisch ausgestaltet ist.

5. Vorrichtung (1) nach zumindest einem der vorherigen Ansprüche, umfassend einen Auffangbehälter (6) zur Aufnahme eines Filtrats der Probe.

6. Vorrichtung (1) nach Anspruch 5,
wobei zumindest ein Teilbereich des Filtermoduls (2), insbesondere ein Teilbereich umfassend den Probenauslass (3b), und/oder der Auffangbehälter (6) derart ausgestaltet ist/sind, dass das Filtermodul (2) bis zu einer vorgebbaren Eintauchtiefe (h) in den Auffangbehälter (6) einbringbar ist.

7. Vorrichtung (1) nach Anspruch 6,
wobei das Filtermodul (2) zumindest in dem Teilbereich, welcher in den Auffangbehälter (6) einbringbar ist, einen geringeren Durchmesser aufweist als der Auffangbehälter (6).

8. Vorrichtung (1) nach einem der Ansprüche 4-7,
wobei ein Durchmesser des Filtermoduls (2) zumindest abschnittsweise, insbesondere in dem Teilbereich, welcher in den Auffangbehälter (6) einbringbar ist, variabel ist.

9. Vorrichtung (1) nach zumindest einem der vorherigen Ansprüche,
wobei die Druckerzeugungsvorrichtung (5) dazu ausgestaltet ist, mittels eines Gases, oder eines Gasgemisches, insbesondere Luft, den Überdruck zu erzeugen.

10. Vorrichtung (1) nach zumindest einem der vorherigen Ansprüche,
wobei die Druckerzeugungseinrichtung (5) im Bereich des Probeneinlasses (3a) angeordnet ist, und/oder wobei die Absaugvorrichtung (7) im Bereich des Probenauslasses (7) und/oder einer Öffnung (6a) des Auffangbehälters (6) angeordnet ist.

11. Verfahren zur Isolierung einer Substanz aus einer Probe umfassend folgende Verfahrensschritte
- Führen einer Probe durch ein Filtermodul (2) von einem Probeneinlass (3a) über ein Filterelement (4) zu einem Probenauslass (3b),
- Erzeugen eines Überdrucks zumindest im Bereich des Probeneinlasses (3a),
- Erzeugen eines Unterdrucks zumindest im Bereich eines Probenauslasses (3b),
**dadurch gekennzeichnet, dass**
der Überdruck in Abhängigkeit der Viskosität der Probe gewählt wird, und der Unterdruck in Abhängigkeit des Überdrucks eingestellt wird.

12. Verfahren nach Anspruch 11,
wobei der Überdruck und/oder der Unterdruck derart eingestellt werden, dass ein Volumenstrom infolge des Überdrucks im Wesentlichen einem Volumenstrom infolge des Unterdrucks entspricht.

13. Verwendung einer Vorrichtung nach einem der Ansprüche 1-10 und/oder eines Verfahrens nach einem der Ansprüche 11 oder 12 bei der Isolierung von Zellen, Zellbestandteilen, oder Nukleinsäuren aus einer Probe.

## Claims

1. Device (1) for isolating at least one substance from a sample,
comprising
a filter module (2) having a sample inlet (3a), a sample outlet (3b), and a filter element (4) for isolating the substance,
a pressure-generating device (5) configured to generate an overpressure at least in the region of the sample inlet (3a), and
a suction device (7) configured to generate a negative pressure at least in the region of the sample outlet (3b),
**characterized in that**
the device (1) is configured to select the overpressure as a function of the viscosity of the sample and to adjust the negative pressure as a function of the overpressure.

2. The device (1) according to claim 1,
wherein the filter element (4) comprises a permeable membrane or a filter.

3. The device (1) according to claim 1 or 2,
wherein the substance is a type of particle, a molecule contained in the sample, in particular a nucleic acid or a protein, or a cell, or a component of a cell.

4. The device (1) according to at least one of the preceding claims,
wherein the filter module (2) is at least partially cylindrical.

5. The device (1) according to at least one of the preceding claims,
comprising a collection container (6) for receiving a filtrate of the sample.

6. The device (1) according to claim 5,
wherein at least one section of the filter module (2), in particular a section comprising the sample outlet (3b), and/or the collection container (6) is/are designed such that the filter module (2) can be inserted into the collection container (6) up to a predefined immersion depth (h).

7. The device (1) according to claim 6,
wherein the filter module (2), at least in the section which can be inserted into the collection container (6), has a smaller diameter than the collection container (6).

8. The device (1) according to one of claims 4-7,
wherein a diameter of the filter module (2) is at least partially variable, in particular in the section which can be inserted into the collection container (6).

9. The device (1) according to at least one of the preceding claims,
wherein the pressure-generating device (5) is configured to generate the overpressure by means of a gas or a gas mixture, in particular air.

10. The device (1) according to at least one of the preceding claims,
wherein the pressure-generating device (5) is arranged in the region of the sample inlet (3a), and/or wherein the suction device (7) is arranged in the region of the sample outlet (3b) and/or an opening (6a) of the collection container (6).

11. A method for isolating a substance from a sample, comprising the following steps:
• passing a sample through a filter module (2) from a sample inlet (3a) via a filter element (4) to a sample outlet (3b),
• generating an overpressure at least in the region of the sample inlet (3a),
• generating a negative pressure at least in the region of the sample outlet (3b),
**characterized in that**
the overpressure is selected as a function of the viscosity of the sample, and the negative pressure is adjusted as a function of the overpressure.

12. The method according to claim 11,
wherein the overpressure and/or the negative pressure are adjusted such that a volumetric flow resulting from the overpressure substantially corresponds to a volumetric flow resulting from the negative pressure.

13. Use of a device according to one of claims 1-10 and/or of a method according to one of claims 11 or 12 for isolating cells, cell components, or nucleic acids from a sample.

## Revendications

1. Dispositif (1) pour isoler au moins une substance d'un échantillon,
comprenant
un module de filtration (2) comportant une entrée d'échantillon (3a), une sortie d'échantillon (3b) et un élément filtrant (4) destiné à isoler la substance,
un dispositif de génération de pression (5) configuré pour générer une surpression au moins dans la zone de l'entrée d'échantillon (3a), et
un dispositif d'aspiration (7) configuré pour générer une dépression au moins dans la zone de la sortie d'échantillon (3b),
**caractérisé en ce que**
le dispositif (1) est configuré pour sélectionner la surpression en fonction de la viscosité de l'échantillon et pour ajuster la dépression en fonction de la surpression.

2. Dispositif (1) selon la revendication 1,
dans lequel l'élément filtrant (4) comprend une membrane perméable ou un filtre.

3. Dispositif (1) selon la revendication 1 ou 2,
dans lequel la substance est un type de particule, une molécule contenue dans l'échantillon, en particulier un acide nucléique ou une protéine, ou une cellule, ou un constituant d'une cellule.

4. Dispositif (1) selon l'une quelconque des revendications précédentes,
dans lequel le module de filtration (2) est au moins partiellement cylindrique.

5. Dispositif (1) selon l'une quelconque des revendications précédentes,
comprenant un récipient de collecte (6) destiné à recevoir un filtrat de l'échantillon.

6. Dispositif (1) selon la revendication 5,
dans lequel au moins une section du module de filtration (2), en particulier une section comprenant la sortie d'échantillon (3b), et/ou le récipient de collecte (6) est/sont conçu(e)(s) de sorte que le module de filtration (2) puisse être introduit dans le récipient de collecte (6) jusqu'à une profondeur d'immersion prédéfinie (h).

7. Dispositif (1) selon la revendication 6,
dans lequel le module de filtration (2), au moins dans la section pouvant être introduite dans le récipient de collecte (6), présente un diamètre inférieur à celui du récipient de collecte (6).

8. Dispositif (1) selon l'une quelconque des revendications 4 à 7,
dans lequel un diamètre du module de filtration (2) est au moins partiellement variable, en particulier dans la section pouvant être introduite dans le récipient de collecte (6).

9. Dispositif (1) selon l'une quelconque des revendications précédentes,
dans lequel le dispositif de génération de pression (5) est configuré pour générer la surpression au moyen d'un gaz ou d'un mélange de gaz, en particulier de l'air.

10. Dispositif (1) selon l'une quelconque des revendications précédentes,
dans lequel le dispositif de génération de pression (5) est disposé dans la zone de l'entrée d'échantillon (3a),
et/ou le dispositif d'aspiration (7) est disposé dans la zone de la sortie d'échantillon (3b) et/ou d'une ouverture (6a) du récipient de collecte (6).

11. Procédé pour isoler une substance d'un échantillon, comprenant les étapes suivantes :
• faire passer un échantillon à travers un module de filtration (2) depuis une entrée d'échantillon (3a) via un élément filtrant (4) jusqu'à une sortie d'échantillon (3b),
• générer une surpression au moins dans la zone de l'entrée d'échantillon (3a),
• générer une dépression au moins dans la zone de la sortie d'échantillon (3b),
**caractérisé en ce que**
la surpression est sélectionnée en fonction de la viscosité de l'échantillon et la dépression est ajustée en fonction de la surpression.

12. Procédé selon la revendication 11,
dans lequel la surpression et/ou la dépression sont réglées de manière à ce qu'un débit volumique résultant de la surpression corresponde sensiblement à un débit volumique résultant de la dépression.

13. Utilisation d'un dispositif selon l'une quelconque des revendications 1 à 10 et/ou d'un procédé selon l'une quelconque des revendications 11 ou 12 pour isoler des cellules, des constituants cellulaires ou des acides nucléiques d'un échantillon.
